# EUROPEAN PATENT APPLICATION

(11) **EP 1 946 829 A1**
(43) Date of publication of application: **23.07.2008**
(21) Application number: 07000166.4
(22) Date of filing: 05.01.2007
(51) Int. Cl.: B01J 3/00, B09B 3/00, B01J 19/24, B01J 19/28, C10L 5/48, D21B 1/00

(54) **Process and apparatus for waste treatment**

(71) Applicant: Sterecycle Ltd., London SW5 OTF (GB)
(72) Inventor: Grierson, John Duncan, London SW7 4AL (GB); Campion, Philip James, Stockport SK6 8AT (GB)
(74) Representative: den Hartog, Jeroen H.J.

(57) **Abstract**

The present invention relates to processes and apparatus for improving municipal waste treatment in autoclave processes. Improvements relate to the use of air-waste stream treatment, indirect heating with thermal fluid, forced steam transfer, autoclave design, waste treatment of contaminated air, classifiers for better separation of fibres from glass or grit and processing. The improvements allow more efficient, safer and environmentally friendly processing, and better end products.

## Description

The invention relates to a process and apparatus for waste treatment.

Waste, in particular municipal solid waste (MSW) and similar types of commercial waste, is an increasing burden on landfills and other forms of waste treatment. Part of the waste stream may be recycled through separated collection. Part of the landfill may be circumvented by incineration; however this is very costly and may have negative environmental impacts. One of the alternatives suggested is treating the waste in an autoclave with steam while tumbling the content in order to breakdown the organic content and enable easier separation. Several examples of this idea exists, such as disclosed in EP 0771237, US 4844351, US 6306248, US 4974781, WO 03/09299, WO 2004/018767 and WO 03/025101.

As of yet, none of these technologies have been commercially put into practice in treating MSW, since several practical problems exist. For example, treated waste can be separated into for example a fibre fraction, but in practice it is difficult to obtain fibre with low levels of contamination and in high yield. Either plastics, glass and grit are still present in the fibre, which preclude economic use in furnaces to burn this material because glass remains in the oven and because plastics require extensive emissions control measures, or the separation is such that the recovery yield of the clean fibre is much less than [e.g.] 90%. Further, apparatus suggested in the prior art may not be economical nor efficient, since the vessels for commercial operation will be about 20 cubic meter or more, generally even 30 cubic meter or more, likely up to 60 cubic meter. For such large vessels energy consumption is high and not sufficiently attractive for a commercially acceptable process. Furthermore, the contaminated gases emitted and fluids discharged as effluents are also substantial and not readily acceptable in commercial use, or the treatment thereof requires substantial investments..

The technology however, has interesting potential: The organic fibres could be used as clean biomass fuel or compost; the glass/grit fraction - if sufficiently clean - can be used either by separating the glass for uses in recycled glass products, or it can be used as recycled aggregates. The municipal waste does not have to be pre-selected, and is reduced to about 30 volume% of its original size. Further, when fibres are separated, and other useful materials are recycled, landfill can be limited to less than 10 volume% of the original waste.

It is an object of the present inventions to solve one or more of the above problems, and to improve the prior art processes in one or more aspects.

In one embodiment of the invention, the process to treat municipal solid waste comprises the steps of,
(1) feeding waste material into a pressure vessel
(2) agitating the vessel while having steam pressure in the vessel
(3) depressurising the vessel, and applying vacuum to the vessel
(4) discharging the vessel
(5) classifying the treated waste, yielding several fractions, such as a fibrous fraction, shattered glass and grit, larger parts such as plastics and metals
(6) while treating the gas emitted during the application of the vacuum with a fluid to clean the exhaust gas from solid and volatile contaminants while using a vacuum pump to achieve a vacuum of about 0.8 bar (abs) or lower.

It is preferred to achieve a vacuum of about 0.6 bar (abs) or lower, as better drying of the fibres is achieved, including further expansion and break down. Generally, the vacuum will be about 0.1 bar (abs) or higher, as a lower vacuum will take long to achieve, and may be less economical. Preferably, the vacuum applied in step (3) is about 0.5 bar (abs) or lower, and most preferably about 0.4 bar (abs) or lower. Generally, the vacuum can be about 0.2 bar (abs) or higher, and may be about 0.3 bar (abs) or higher.

Another advantage of using a vacuum pump is that in depressurizing the vessel, time is gained (each batch will have a shorter cycle time in comparison to simply letting pressure off to atmaspheric), and even more importantly, that when opening the vessel after the autoclave treatment, no live steam is emitted and vapours displaced during emptying the autoclave contain only extremely small concentrations of Volatile Organic Compounds.

Any type of vacuum pump can be used if of sufficient capacity. More suitable vacuum pumps are eccentric-rotary vacuum pumps, which are preferred over positive displacement pumps. Suitable examples of a suitable type of vacuum pump include but are not limited to liquid-ring vacuum pump, rotary lobe pump and rotary gear pump. A liquid ring vacuum pump is preferred, as the water itself with rotor blades is acting as rotor. This is in particular an advantage as the gas stream from the scrubber still has some steam or water vapour. A liquid-ring vacuum can handle any additional water through an overflow to the central process-water system.

Preferably, the vacuum pump has a capacity of about 1 m³/min or higher, more preferably about 2 m³/min or higher, as to allow sufficient vacuum to be reached in about 15 min or lower from the vessel, preferably about 10 min or lower, such as for example about 5 min. For a 60 cubic metre vessel, one can choose one pump of double capacity, or two pumps of the given capacity for a 30 cubic metre vessel. Generally, the capacity will be about 50 m³/min or less, and preferably 30 m³/min or less, as a very large vacuum pump may be more expensive. The upper limit is merely dictated by economical considerations. The lower limit has distinct additional technical effect in the speed of breaking up fibre due to vacuum expansion. Hence, preferably, the capacity of the pump(s) is sufficient to achieve a vacuum of a certain vessel of 0.5 bar (abs) or less in 5 to 15 min, preferably 5-10 min when starting from 1 bar (abs). In a preferred embodiment, the vacuum pump has a capacity sufficient to reach a vacuum of 0.5 bar (abs) in a vessel of about 10 cubic meter or more in about 15 min or less.

Cleaning of the gas preferably is achieved in a scrubber. Further optimisation with respect to environmental burden is achieved when the washing water is recirculated. The gas may comprise steam, volatile organic compounds (VOC's) and dust. In the scrubber, steam is condensed, increasing the extraction rate of steam and/or air from the vessel.

Hence, in a preferred embodiment of the invention, the fluid to clean the exhaust gas is water. More preferably, the water is process water that is recycled in the system. This is an advantage, as much of the dust and volatile components may be kept in the waste treating cycles, and may be broken down in a next cycle. The process water can be used to wet the MSW material, and to produce steam within the vessel. There is no need to use boiler quality feed water for these purposes.

The prior art suggests to use an eductor for this step, which appears to have the disadvantage of the need to use large amounts of fluid at substantial pressure to achieve a suitable vacuum in the desired time. A suitable eductor would need to pump more than 1000 cubic metres per hour. Therefore, also the amount of energy required is much higher, which is a clear disadvantage. The scrubber of the present invention only needs a pump capacity of about 50 cubic metres per hour and at lower pressure to be effective.

Preferably, two or more vessels are used in an alternating fashion, while using the heat and steam from the discharge of step (3) to apply heat and/or steam to another vessel in a step (2'). This is also an advantage for efficient use of the vacuum pumps, as one pump or set of pumps can be used intermittently for the different vessels. Hence, only one pump or set of pumps is needed for processing with two or more vessels. It is preferred to have two or more pumps, in case the one needs maintenance, it is still possible to operate the plant.

In a preferred embodiment of the invention, the process comprises further a step of applying a vacuum after charging of the vessel, but before adding steam thereto. This has as advantage that pressure is more effectively increased to obtain a fully saturated environment. It furthermore has as advantage that the air displaced by the vacuum pump - which does comprise VOC's - is effectively cleaned in the scrubber. Prior art suggests to add steam during loading to displace air. This has as a disadvantage that a large contaminated air/steam stream is emitted to the environment, or has to be handled.

In a further embodiment of the invention, the process to treat municipal solid waste in two or more vessels, which are used in an alternating fashion, comprises the steps of,
(1) feeding waste material into a pressure vessel
(2) agitating the vessel while having steam pressure in the vessel
(3) depressurizing the vessel, and transferring the steam from a first vessel to a second vessel with the aid of a compressor
(4) discharging the vessel
(5) classifying the treated waste, yielding several fractions, such as a fibrous fraction, shattered glass and grit, larger parts such as plastics and metals

Several embodiments in the prior art suggest to re-use steam. However, a process with using an apparatus for increasing the speed of steam transfer from one vessel to another has great advantages. Firstly, the time to discharge one, and to charge another vessel is shortened, secondly, more efficient use is made of steam, as energy losses are diminished, and thirdly, more steam can be extracted from the first vessel, and less steam is necessary for fresh steam supply.

The compressor may be a mechanically driven compressor (generally using electricity as energy source), but preferably would be a steam powered compressor. As steam powered or driven compressors, it is suitable to use a steam ejector, steam eductor or steam driven jet pump. In the present application, these variants are together denoted as thermo-compressor.

The compressor is preferably a thermo-compressor, driven by steam of e.g. 6-15 bar gauge, which steam is supplied to the vessel. This is in particular an advantage in case fresh steam is used to charge steam to the vessels. Adding fresh steam has the advantage of shortening the cycle-time. With shortening the cycle-time, the capacity of a.plant is increased.

in a further embodiment of the invention, the process to treat municipal solid waste in two or more vessels, which are used in an alternating fashion, comprises the steps of,
(1) feeding waste material into a pressure vessel
(2) agitating the vessel while having steam pressure in the vessel
(3) depressurising the vessel, and heating the content of the vessel through indirect heating with thermal fluid.
(4) discharging the vessel
(5) classifying the treated waste, yielding several fractions, such as a fibrous fraction, shattered glass and grit, larger parts such as plastics and metals
wherein the thermal fluid is provided via a heating system which comprises a primary circuit with a heating element for heating the thermal fluid, and secondary circuits (one circuit for each vessel) for heating the two or more vessels independently.

Preferably, the secondary circuits comprise a cooling element to lower the temperature of the thermal fluid, This may be important, as the inner surface of the vessel and the coils in the vessel preferably are about 100 °C or lower during unloading, and preferably during the time the vessel is at atmospheric pressure or lower, as otherwise plastic may stick to the walls of the vessel.

In another embodiment of the process, indirect heating with the thermal fluid is applied as soon as the vessel is charged with waste, and the door is closed.

The thermal fluid can be heated to a temperature of about 160 °C or higher, preferably of about 180 °C or higher, and even more preferred, about 200 °C or higher, such as for example up to about 250 °C. Higher temperatures are feasible, but may become expensive as special measures often have to be taken. Generally, the temperature of the thermal fluid is about 350 °C or lower. In view of the potential decomposition of plastics; it is preferred to keep the temperature of the thermal fluid at about 250 °C or lower.

As thermal fluid, mineral oils or synthetic fluids are suitable. Synthetic fluids are preferred due to their lower flashpoint and higher auto-ignition temperatures.

The heating is achieved by heating thermal fluid in the first circuit by for example direct fired heating coils containing the thermal fluid, or by electrical heating or the like.

It is an advantage to have one primary circuit with one heating unit, as this one heating unit can be used for two or more vessels. Hence, efficient use is made of the resources available. The secondary circuits, one per vessel, allow the precise adjustment of temperature per vessel, which is an advantage to optimize the efficiency of the vessels.

In another embodiment of the invention, the indirect heating of the autoclave vessel is done at least in part through a heated jacket. In a preferred embodiment, heating is done through both conduits in the vessel, and a heated jacket which shortens the cycle time.

In a further preferred embodiment, the process allows independent closure of the heating lines to either the jacket or the internal conduits. Heating the jacket of the vessel has the advantage of increasing the heat transfer capacity which shortens the cycle time, and the heat transfer may be aided by having a flow of heating medium in the jacketed section of the vessel guided with internal baffles to ensure efficient heat transfer from the thermal fluid to the inside and contents of the vessel, as shown in the figure below. In order to optimize the cycle time, it is advantageous to optimize this indirect heat transfer.

It is a further advantage of the process, that with the optimized indirect heat transfer, boiler steam can be strongly reduced, or even eliminated.

In one embodiment of the invention, heating the contents of the autoclave is started as soon as the door is closed.

In the case whereby the indirect heating with the thermal fluid system is optimized according the present invention, it is possible to treat the content of 1 tonne of average municipal waste with the energy equivalent of only about 0.15 tonnes of steam ( 6 bar gauge) or less.

In a preferred embodiment of the invention, the total thermal energy input (steam and thermal fluid supplied by heating elements) per tonne of input municipal waste can be as low as 100 kWh, while achieving separated waste that has low inorganic in the biomass (or fibrous) fraction.

In one embodiment of the invention, the average thermal energy input is about 125 kWh per tonne, while achieving a fibrous fraction with about 5 wt% or less that is non-biomass. The non-biomass will be mainly grit and glass and small plastics. Preferably, the amount of non-biomass in the fibre is about 3 wt% or less, and most preferred about 1 wt% or less. The amount of biomass in the non-fibre part preferably is - with a process requiring on average about 125 kWh or less energy input per tonne - preferably about 5 wt% or less, more preferably about 3 wt% or less, and even more preferred, about 1 wt% or less. The average total energy input preferably is about 125 kWh per tonne or lower,

In another preferred embodiment, the amount of energy supplied through boiler steam is 25 % or less, relative to the amount of energy supplied by the thermal fluid system, more preferred the amount of fresh steam is about 10% or less relative to the average energy input. It is most preferred to have virtually no additional steam input in normal operation. This has a distinct advantage, that only a relatively small 'occasional-use steam boiler' is necessary which is only used e.g. in the start-up phase of the plant, or when uncommon process circumstances arise. This is an advantage, as the routine use of boiler steam causes a variety of process management issues, such as requiring 'clean' water feed, requiring softening of water (by added chemicals), requiring skilled operation for stability of steam production etc. Hence, it is preferred that about 90% or more of the average energy input per tonne of treated waste is supplied by the indirect heating system, and more preferably about 95% or more. To use virtually no steam during normal production is most preferred.

In a further preferred embodiment, the steam boiler for occasional use is integrated in the thermal fluid heater. This has the advantage that only one heating apparatus is necessary for all energy input in the vessels even if direct and indirect heating is combined.

In a further preferred embodiment of the present invention, dust and volatiles are precluded to be discharged into the environment. This is an important feature for the acceptance of the technology, especially near populated areas, but is not so easy to achieve, since waste plants are often known to be the source of malodorous emissions.

In one embodiment, the complete plant, including all apparatus to treat the waste material is enclosed in a building that is kept at a lower pressure than atmospheric pressure, and which further comprises a blo-filter for cleaning of ventilation air before discharge to atmosphere.

In another preferred embodiment, only the part of the waste treatment plant which receives the waste is kept under the lower than atmospheric pressure, and the extracted air from that part of the building is passed to atmosphere through a bio-filter. The remainder of the plant being provided with local extract ventilation (LEV) hoods to preclude significant contamination of that part of the building's environment. The use of LEV hoods downstream of the autoclave has the further advantage that a safe environment for workers is achieved without the need for further protective measures. As the product material treated downstream of the autoclave is sterile, extraction of dust and any remaining volatile material is sufficient to achieve a completely safe working environment.

It is preferred, that the required under-pressure in a building housing the waste treatment facility, and/or the waste receiving part is achieved by applying about 1 or 2 or more air changes per hour via the building ventilation, thereby ensuring a flow of air into the building at all times. Generally, the number of average air changes will be about 8 or less, and preferably, about 4 air changes will be sufficient.

In a further embodiment, the conveyors and other open separating equipment are fitted with LEV hoods to catch dust and volatile material (if present), the air streams so produced are passed to a scrubbing or cleaning section. The hoods preferably are attached to the top of the conveyors, and are arranged to capture fugitive dust and VOC emissions via maintaining air in-flow at all openings to atmosphere around the conveyors. Openings are preferably about 5 cm or smaller, although 10 cm or smaller may occasionally occur. More preferably, openings are about 3 cm or smaller. The air suction stream preferably maintains a velocity in the inward air streams through these openings of about 0.1 m/second or more and generally about 4 m/second or less.

In another embodiment of the invention, the autoclave vessel, when in an open position, has LEV hood elements nearby the opening, allowing suction of fumes and particles liberated during charging, and/or during discharging. The suction-air velocity at the entrances to these LEV hoods is preferably about 0.3 m/second or more. The LEV hood entrance air velocity can be 5 m/second or less. The volumetric extraction capacity of these hood elements can be fairly low, as it is preferred not to add steam to the vessel during loading.

The scrubbing or cleaning section for treating the suction air may comprise filters that will need to be replaced or cleaned. In a preferred embodiment, the waste-air stream is scrubbed with clean water to remove contaminants. This has as a further advantage, that the contaminations are caught by a component which thereafter is further treated in the process. More in particular, the resultant process water can be added to the waste when delivered into the vessel causing further treatment of this contaminated water. This has as further advantage that only one sort of liquid waste (contaminated process water) needs to be treated.

In case the process water appears to build-up organic waste, water can be discharged to waste-water treatment facilities, or can be further concentrated, and the organic fluid fraction can for example be used as organic feed in a sewage treatment digester plant.

In a further embodiment of the invention, the process comprises a classification step in which the majority of the fibre product, contaminated with small glass shards and grit particles, is subjected to an air separation step on a vibrating screen, which causes the lighter particles to flow downwards, and the heavier particles to move upwards.

Preferably, the fibrous fraction that is to be classified is supplied to the middle section of the classification apparatus. The apparatus comprises an inclined bottom screen through which an air stream flows. The screen is vibrating, causing particles that lay on the screen to be transported upwards. The air stream causes lighter particles to be lifted slightly above the screen, and thereby, the lighter particles flow over a kind of air cushion downwards. The air velocity in such apparatus is relatively low in comparison to apparatus known as "air knives", and selected, in combination with the selection of tilt of the screen, and the strength of the vibration, to be sufficient to achieve an effective output, combined with an effective separation.

It appeared difficult to reliably separate small glass, grit particles from the organic fibres, yet, the presence of such inorganic and plastic materials significantly reduces the value of the fibre as a "renewable" fuel or as a compost. In use as a "renewable" fuel, the presence of plastic particles in the organic fibre at more than 1.5 wt% will possibly breach the qualifying threshold for Renewable Obligation Certificates whereby at least 90% of the gross calorific value of the biomass fuel must have come from renewable resources. A 1.5 wt% and greater plastic content (assuming 60 wt% moisture and 10% ash) in the fibre could contribute more than 10% of the gross calorific value from the biomass fuel and hence disqualify the fibre from ROCs eligibility. Glass particles may cause glass residue build-up in the combustion system, which may cause substantial maintenance problems. Further, also the inorganic material should be clean in the sense that preferably less than 3 vol%, and more preferably less than 1 vol%, is biomass waste in case this stream is to be used as a recycled aggregate for purposes such as road-fill. One of the methods suggested in the prior art is the use of "air knives" to separate organic fibres from glass and grit. Air knife technology causes lighter material to float, and heavier material to fall down. It appeared that air knife technology is not suitable for good separation since both fractions remained highly contaminated.

With the method of the present invention, it is possible to separate organic fibrous material, and inorganic material in a reliable way, in which both fractions have very high levels of purity.

### Short description of the drawings:

Fig. 1: Figure 1 shows a general outline of a waste plant using an autoclave
Fig. 2: Figure 2 shows embodiments of the present invention
Fig. 3: Figure 3 shows a further embodiments of the present invention
Fig. 4: Figures 4 and 4A show further embodiments of the present invention
Fig. 5: Figure 5 shows further embodiments of the present invention

### Detailed description of the drawings:

### Like numerals are used for like components in the different figures

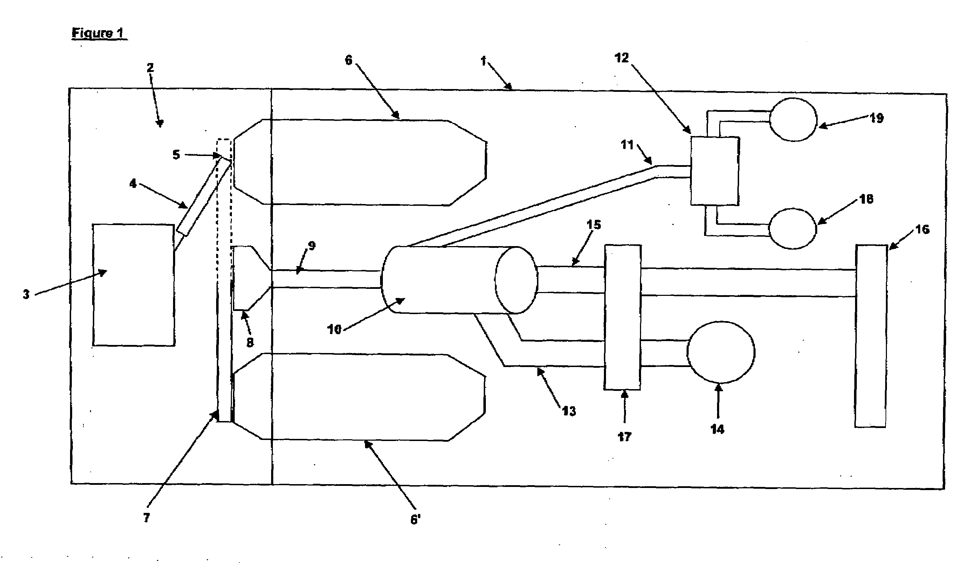

In figure 1, (1) is the plant building that -in whole or in part - may be provided with suction apparatus to maintain ventilation extract to preclude fumes to escape from the building. Air ventilation treatment may be provided through the use of bio-filters, preferably from the top of the building. Waste is provided by vehicles into area (2). In this area, a manual or automated screening is performed by an operator to take away oversized waste like engine blocks, large pieces of concrete, carpets and the like. Preferably, this area has active air ventilation, preferably having 2-4 air changes per hour. Further, it is preferred to have the waste fed to a hopper (3), that is provided with a screen of e.g. 40-45 cm (18 inch) mesh to further preclude oversized parts in the autoclave. Also, the hopper is used to weigh the amount of waste fed to the autoclave. The hopper may be equipped with a measurement of the weight and/or the volume to be put into the autoclave vessel. If an autoclave vessel is available to be charged, a feed conveyer (4) is used to feed the autoclave. The feed conveyer preferably is equipped with a spray nozzle (5) to wet the waste material. The wetting agent preferably is contaminated process water (thereby usefully recycling this water) and preferably at elevated temperature (e.g. 30 to 80 °C).

After the autoclave vessel (6) is charged, steam and/or heat is applied to the vessel. In a preferred embodiment, the autoclave is first brought to reduced pressure, such as for example about 0.5 bar (abs) through the application of a vacuum system. Steam venting can be reduced in this way, as less air is to be replaced. Thereafter, steam is introduced, preferably from the other vessel, and the contents are vented for a short time (1-2 minutes). The vacuum system can aid in achieving fast transfer of vented gasses, and contaminated air or steam can be cleaned in a scrubber. Thereafter, the vent of the autoclave is closed, and further steam and/or indirect heating is applied. Furthermore, the content of the vessel is mixed, preferably through rotating the vessel. It would also be possible to have a mixing shaft internally in the vessel. It is furthermore preferred to apply both steam and indirect heating, as that allows fast heating to appropriate temperatures. The steam and temperature conditions should be chosen such that the content of the vessel is sterilized, and broken into small pieces. Preferred process conditions are exemplified below. General process conditions are a temperature above 121 °C, preferably above 130 °C. Generally, the temperature will be below 170 °C, as otherwise PVC will start to decompose. Preferably, the temperature will be below 160 °C.

It is furthermore preferred not to apply a severe milling or shredding steps. This is important to preclude the setting free of heavy metals from batteries or other potentially contaminating constituents. Also, it is preferred, not to apply high temperature, as that causes plastics to melt and intermingle with organic fibre, which causes lowering of fibre yield, and contaminating the fibre and plastic fractions. Hence, it is particularly preferred to keep the temperature at about 140 °C or lower:

After sufficient treatment of the waste in the autoclave, the content is brought to atmospheric pressure and discharged on a conveyer (7), which transports the content to the down-stream classification area. It is preferred to dry the content in the autoclave through applying reduced pressure (to e.g. about 0.5 bar (abs)) and by applying indirect heating. It is preferred to transport the content into an intermediate hopper (8) in order to achieve fast discharge of the autoclave vessel. The intermediate hopper (8) thereafter supplies the downstream classification area through conveyer (9). The classification device may comprise suitable picking apparatus to discharge e.g. rags, which may be added to conveyer (9). Furthermore, it may be useful to have a large size screen (e.g. 14-30 cm (6-12 inch) screen) to remove large items before entering the classification section.

It is preferred to have as a first step in the classification area a trommel screen (10). Other screening devices may be suitable as well.

A trommel screening device (10) or other device can have a plurality of classification sizes. In one embodiment of the invention, the lowest size fraction is about 12 mm or lower, although a size of about 10 mm or lower is preferred, and a size of about 8 mm or lower is even more preferred. This fraction is transported via conveyer (11) to air classifier (12). The next fraction (large particle fraction) will be generally about 50 mm or less, and may be about 40 mm or less. This fraction may be transported via conveyer (13) to hopper (14). This will leave the oversize fraction of 4 or 5 cm or more, which can be transported over conveyer (15) to picking belt (16). On the picking belt, it is possible to remove plastic bottles, which are now clean and all labels are removed. Large wooden parts and other items may be collected. Both the large particle fraction, as the over-sized fraction can be subjected to magnetic and Eddy current screening devices (depicted as 17) in order to remove iron, aluminum and other metals, batteries and the like. It may be suitable, to first have certain items picked from the picking belt, before collecting metals.

The low size fraction preferably is subjected to a further classification step in order to remove grit and glass shatters in classifier (12), which will give heavies (18), that may be combined with the larger fraction in (14), and which gives fibres (19). The fibre fraction may be further treated to produce pellets or briquettes, or it can be used in loose form.

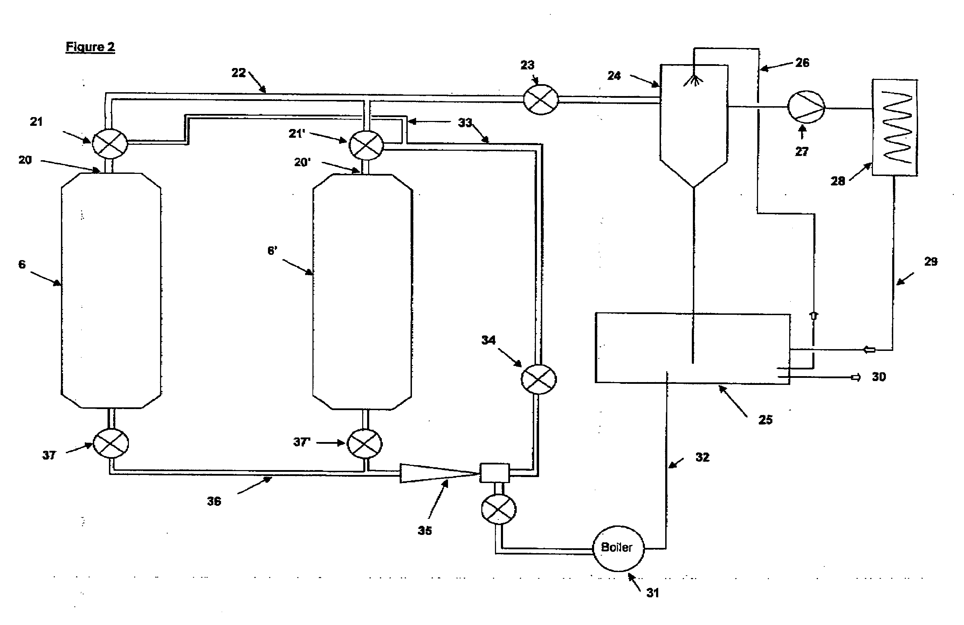

In Figure 2, vessels 6 and 6' are the autoclaves. It will be understood by the skilled man, that two or more vessels are preferred, but that the vacuum system could advantageously be used in single vessel plants. The autoclaves are equipped with vent openings (20) and (20') that are preferably located in or near the doors of the vessels. Each vent opening can be closed using manifolds (21) and (21'). The vents are connected to the vent line (22). The vent line (22) can be used to evacuate one of the vessels, e.g. vessel (6), if valve (23) and (21) are open. The contaminated air stream from the vessel is cooled and scrubbed in a scrubber (24) with water from the water tank (25) through line (26) with a pump if necessary (not shown). The vacuum pump 27 allows air to be emitted through an entrainment separator (28), the effluent water being supplied via line (29) to the water tank (25). Vent air from entrainment separator (28) passes into the LEV extraction system for the building wherein this air could be further washed using clean water, filtered or otherwise treated alongside the contaminated air streams, e.g. arising from hoods and other places. Water in the water tank (25) can be used to pre-wet the food to the autoclave through line (30), to feed the steam generator (31) through line (32). In case the vessel (6') is not at the end of the cooking cycle and is therefore unable to supply steam to autoclave (6), boiler steam can be applied to vessel (6) after vessel (6) has been evacuated. In that case, valve or manifold (20') of vessel (6') can be opened to line (33), while opening valve (34). The supply of the steam can be aided by the use of a thermocompressor (35) or other means through line (36) to vessel (6) by opening valve (37). The vent line of vessel (6) can be kept open for a few minutes to thoroughly ensure all residual air in vessel (6) is removed and a homogeneous steam atmosphere is achieved. Then, the valve (20) will be closed, and further steam (if necessary) can be added to vessel (6) from the boiler (31), after closing valve (34).

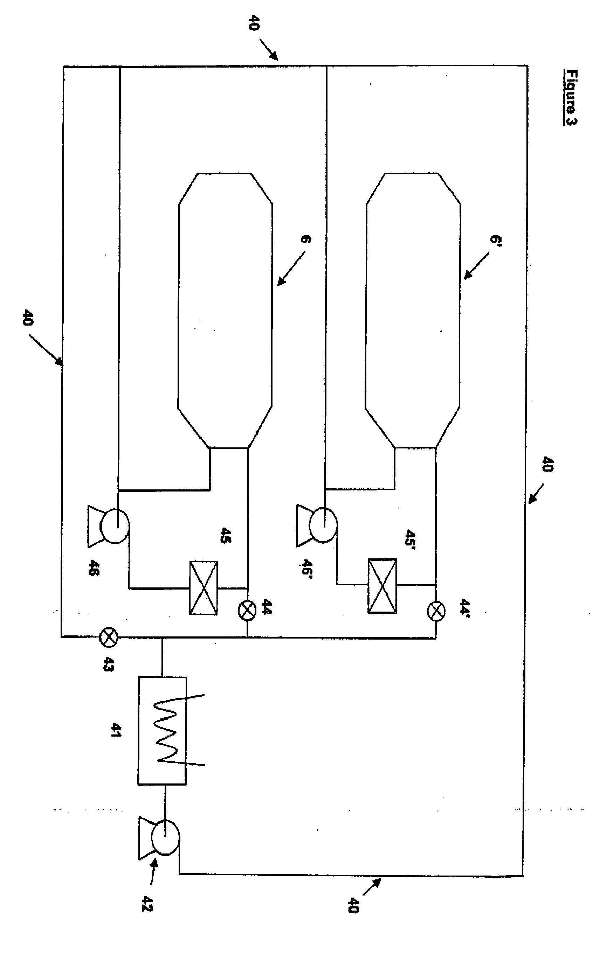

Figure 3 shows an embodiment of a thermal fluid system, in which (6) and (6') denote the autoclave vessels. The vessels are equipped with coils and/or a heating jacket to indirectly heat the content of the vessel. Preferably a liquid thermal fluid is used as the heat transfer medium. A primary circuit is depicted by line (40), that further comprises one heating element (41). The heating element may be a burner, an electrical heated heat exchange element or the like. The thermal fluid is preferably constantly pumped around primary distribution line (40) by pump (42). In case one of the vessels e.g. vessel (6) needs to be heated, pump (46) is started and valve (44) can be opened whereby hot thermal fluid is admitted into the secondary heating loop on vessel (6) and heating may commence. If both vessels (6) and (6') require heating at the same time, valve (43) can be in whole or part, closed to direct the whole of the flow in the primary circuit to the secondary circuits and hence to maximize vessel heating. When a vessel (6) no longer requires heat, valve (44) may be closed and valve (43) opened further to ensure thermal fluid heater (41) has sufficient flow to prevent overheating. Where the vessel requires cooling e,g. at the end of it's cycle it may be helpful to activate a cooler, like for example a heat exchanger (45), or a blown air cooler, to cool the thermal fluid, and to preclude fouling of the heat internal transfer surfaces e.g. by adherence of melted plastic.

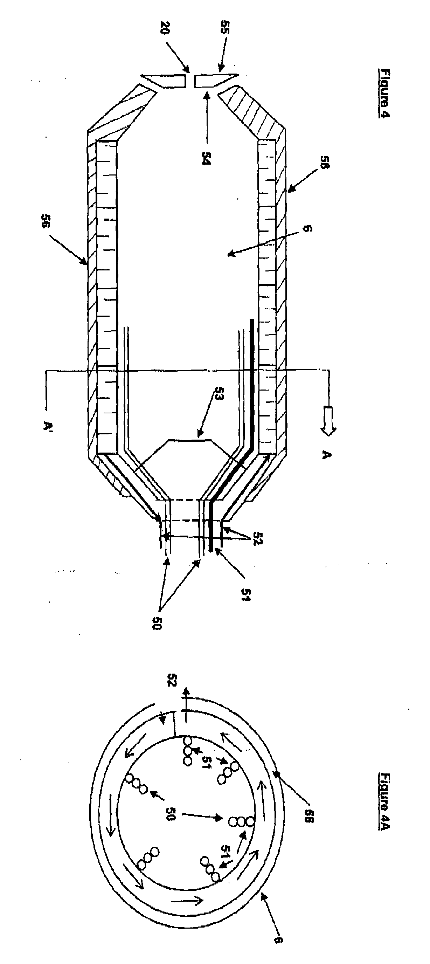

Figures 4 and 4A show schematic drawings of a vessel which can be used by preference in the present process: In Figure 4, the vessel (6) is equipped with steam inlet pipes (50), and thermal fluid conduits (51) and (52). The steam inlet pipes, and the thermal fluid conduits can be welded to the vessel as shown in Fig 4A. The vessel preferably comprises a protective screen (53) at the bottom, and a door-opening (54). The door (55) preferably has a vent opening (20), that is sealable through valve (21). In stead of a vent opening in the door, it is possible to use one or more of the conduits in the vessel as vent pipes. In such a case, it is preferred that the conduit has its opening near the end of the vessel where the door is located. Figure 4 shows the thermal oil conduits (52) to/from the jacket of the vessel, the jacket is fitted with circumferential baffle plates, that ensure high flow of the thermal fluid to all parts of the jacket and hence to all parts of the vessel shell whereby good heat transfer and effectiveness of the jacket to vessel heat transfer surface is assured. It is preferred, to have the outside of the vessel insulated (56), e.g, from e.g. mineral wool insulation or foamed glass fibre, both for heat conservation, and for safety. In figure 4A, it is shown that the steam inlet/vent outlets and oil conduits are preferably welded on top of each other, as to make baffles to push the material and make it tumble. Preferably, the baffles are adapted to be helical in the vessel longitudinal axis so as to be able to move material back and forth, depending on the direction of rotation of the vessel. By providing the vessels with both a heated jacket, and heated internal conduits/baffles, it is possible to achieve the whole of the energy transfer (apart from the steam recycle from one vessel to the other) to occur through the indirect heating system while achieving a short cycle time. This is an advantage, as it is not necessary to have continuously available boiler steam.

It is preferred to have the vessel designed such that about 35% or more, preferably about 40% or more, and about 50% or less of the heat is transferred through the jacket. It is preferred, that about 65% or less, and about 50% or more of the heating energy is supplied through the internal conduits. This design allows relatively short cycle times per batch of treated waste, preferably using steam from another vessel as the only steam source.

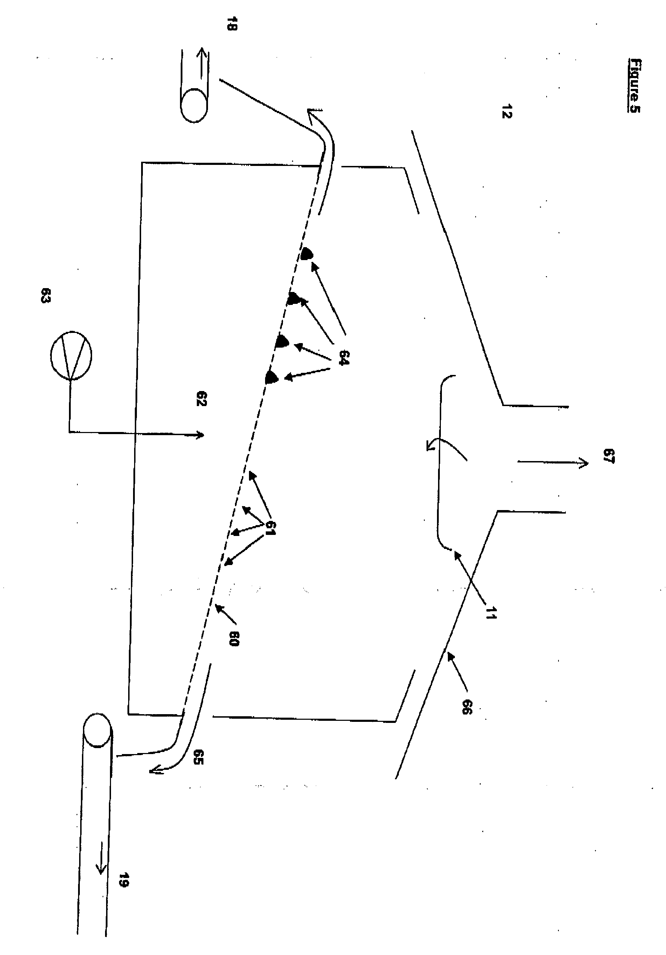

Figure 5 shows a type of air classifier which appeared to be very suitable to achieve high purity organic fibre. Through conveyer (11), the smallest fraction from the trommel screen (10), or other screen, is forwarded to the classifier (12). The classifier is equipped with a tilted plate (60) with perforations (61). Air (62) is blown through the perforations (61) by means of compressor (63). The plate (60) is a vibrating plate, causing heavier particles (64) to shift upwards, while the air flow (which needs to be as low as convenient) causes the lighter particle (65) to flow on an air-cushion downwards. Conveyers (18) and (19) can be used to transport the classified particles to hoppers, bunkers or other suitable place. Preferably, the classifier is equipped with a hood (66) to catch any dust that is blown out of the apparatus. The hood preferably causes the contaminated air (67) to be transported to a dust collection device preferably a cyclone separator or filter (not shown).

In a preferred embodiment of the invention, the invention relates to a process to make a biomass fibre based fuel comprising the steps of
(1) feeding municipal waste material into a pressure vessel
(2) agitating the content of the vessel while having steam pressure in the vessel by direct steam injection and by indirect heating
(3) depressurizing the vessel, and applying vacuum to the vessel in order to dry the fibrous content of the vessel to about 40-60 wt% of water
(4) discharging the vessel
(5) classifying the treated waste through a screen to remove the <12 mm fraction, comprising about 2% by weight of plastic or less,
(6) treating the <12 mm fraction in an air classification device to yield a fibrous fraction that comprises about 2% of inorganic material or less (if calculated at 60 wt% moisture).

Drying the fibrous fraction in the autoclave by the application of heat and preferably also vacuum has the advantage that screening is more efficient. Fibres with a moisture content of more than 60%, e.g. 65% which is normal for non-dried steam treated fibers, are much more difficult to separate. Further, drying under vacuum has the advantage, that fibres are further subjected to break up by expanding moisture during drying and thereby the fibres lose integrity. This is also more advantageous than drying afterwards, as such a drying step will be at atmospheric pressure and less effective. Preferably, the content of the vessel is dried to have a fibrous fraction with a moisture content of about 55% or lower, and even more preferably about 50% or lower.

Because of the further degradation of the fibre, it is possible, and preferred, to remove about 10 mm or less as the smallest fraction, while still achieving high yield. It is even more preferred to remove the about 8 mm fraction or less with >90% yield of biomass (fibrous) material.

Preferably, the fibrous fraction constitutes about 90 % or more of the theoretical achievable amount of biomass fraction. It actually appears possible to achieve a yield of fibrous fraction being about 95% or more of the original biomass, such as for example about 98%.

Preferably, the amount of plastic in the fibre fraction is about 2% or less, more preferably about 1% or less. This is an advantage, as the use of the fibres as a biomass fuel qualifying for ROCs requires that >90% of the fuel energy content is from a renewable source. Plastic has a high calorific content, so only a very small amount is allowable in fibre to be used as a renewable biomass fuel.

The fibrous fraction after classification generally will have a moisture content of about 45% or lower. Depending on the end-use, the moisture content may be further lowered in a circulating flash dryer, a fluidized bed dryer, band dryer or the like.

The fibrous fraction may be pelletized, converted into briquettes for fuel and the like.

The fibrous fraction preferably has a low heavy metal content, such as for example less than 1 ppm Arsenic, and <50 ppb Lead.

A number of the above described embodiments are described as separate embodiment, and can indeed separately be used to improve the several existing processes, apparatuses and plants described in the prior art. It will however be understood by the skilled artisan, that the individual embodiments can be combined, and that a combination of the embodiments will have an advantageous effect. In a most preferred embodiment, all or most of the improvements are combined, to achieve waste treatment process, apparatus or plant with optimal performance

## Claims

**1.** Process to treat municipal solid waste comprising the steps of,
(1) feeding waste material into a pressure vessel
(2) agitating the vessel while having steam pressure in the vessel
(3) depressurizing the vessel, and applying vacuum to the vessel
(4) discharging the vessel
(5) classifying the treated waste
(6) while treating the gas emitted during the application of the vacuum with a fluid to clean the exhaust gas from solid and volatile contaminants while using a vacuum pump to achieve a vacuum of about 0.8 bar (abs) or lower.

**2.** Process according to claim 1, wherein two or more vessels are used in an alternating fashion, using steam from the discharge step (3) to apply steam to another vessel.

**3.** Process according to anyone of claims 1-2, wherein the vacuum pump is an eccentric-rotary vacuum pump.

**4.** Process according to any one of claims 1-3, wherein the vacuum pump has a capacity sufficient to reach a vacuum of 0.5 bar (abs) in a vessel of about 10 cubic meter or more in about 15 min or less.

**5.** Process according to any one of claims 1-4, wherein the exhaust gas is cleaned in a scrubber.

**6.** Process according to any one of claims 1-5, wherein the fluid used to clean the exhaust gas is process water, which is used - in part - to wet the waste which is fed to the vessel.

**7.** Process according to any one of claims 1-6. wherein a vacuum is applied after charging of the vessel but before adding steam thereto.

**9.** Apparatus for treating municipal waste comprising
(1) a feeding unit
(2) an autoclave
(3) a system to achieve a vacuum of at least 0.8 bar (abs) comprising a scrubber and a rotary vacuum pump
(4) a classification section comprising a screen and an air classification device

**10.** Apparatus according to claim 9 wherein the pump is a liquid ring vacuum pump

**11.** Apparatus according to any one of claims 9-10 wherein the capacity of the pump is between 1 and 30 cubic metre per min

**12.** Apparatus according to any one of claims 9-11 wherein the apparatus comprises a water tank with process water that can be used in the scrubber.

**13.** Process for the treatment of municipal waste in an autoclave process, followed by classification of the treated materials, wherein the process comprises a classification step in which the majority of the fibre product, contaminated with glass and grit particles is subjected to an air separation step on a vibrating screen, which causes the lighter particles to flow downward, and the heavier particles to move upwards.

**14.** Apparatus for treating municipal waste comprising
(1) a feeding unit
(2) at least one autoclave,
(3) a classification section comprising a screen and an air classification device, the air classification device is capable of treating fibre containing product, contaminated with glass and grit particles, comprising a tilted vibrating screen and an air supply capable of creating an air flow from the bottom of the screen.

**15.** Process to treat municipal solid waste in two or more vessels, which are used in an alternating fashion, comprising the steps of,
(1) feeding waste material into a pressure vessel
(2) agitating the vessel while having steam pressure in the vessel
(3) depressurising the vessel, and transferring the steam from a first vessel to a second vessel with the aid of a compressor
(4) discharging the vessel
(5) classifying the treated waste.

**16.** Process according to claim 15, wherein the compressor is steam driven compressor.

**17.** Apparatus for treating municipal waste comprising
(1) a feeding unit
(2) at least two autoclaves
(3) a connection between a plurality of autoclaves for transporting steam from one autoclave to another
(4) a classification section comprising a screen and an air classification device, wherein the connection for transporting steam comprises a compressor.

**18.** Apparatus according to claim 17, wherein the compressor is a steam driven compressor.

**19.** Process to treat municipal solid waste in two or more vessels, which are used in an alternating fashion, comprising the steps of,
(1) feeding waste material into a pressure vessel
(2) agitating the vessel while having steam pressure in the vessel
(3) depressunsing the vessel, and heating the content of the vessel through indirect heating with thermal fluid.
(4) discharging the vessel
(5) classifying the treated waste, yielding several fractions, such as a fibrous fraction, shattered glass and grit, larger parts such as plastics and metals
wherein the thermal fluid is provided via a heating system which comprises a primary circuit with a heating element for heating the thermal fluid, and secondary circuits (one circuit for each vessel) for heating the two or more vessels independently.

**20.** Process according to claim 19, wherein indirect heating is applied through conduits in the vessel, and through a heated jacket of the vessel.

**21.** Process according to any one of the claims 19-20, wherein the during discharge of the vessel, the inner surface and the coils of the vessel are at a temperature of about 100 °C or below.

**22.** Apparatus for treating municipal waste comprising
(1) a feeding unit
(2) at least two autoclaves comprising at least one of internal conduits for transporting a thermal fluid or a jacket with openings for transporting thermal fluid,
(3) connection between the at least two autoclaves for transporting steam from one autoclave to another
(4) a classification section comprising a screen and an air classification device, wherein the apparatus is provided with (5) a heating system which comprises a primary circuit with a heating element for heating the thermal fluid, and secondary circuits (one circuit for each vessel) for heating the two or more vessels independently.

**23.** Apparatus according to claim 22, wherein the secondary circuits comprise a cooling element.

**24.** Process for the treatment of municipal waste in an autoclave process, followed by classification of the treated materials, wherein the open side of the conveyers and other open equipment in the classification section after autoclaving comprise a hood with air suction to catch dust and volatile material (if present).

**25.** Process according to claim 24, wherein the air stream being supplied to a washing or cleaning section.

**26.** Process according to any one of claims 24-25 wherein the air suction maintains a velocity in the inward air stream of about 0.1 m/second or more

**27.** Plant for treating waste comprising one or more apparatus according to any one of the above apparatus claims.

**28.** Plant according to claim 27, wherein the part of the waste treatment plant which receives the waste is kept under sub-atmospheric pressure, and the air of that part of the building is vented through a bio-filter, the remainder of the apparatus being provided with local extract ventilation (LEV) hoods to preclude significant contamination of the environment.

**29.** Process to make organic fibre based fuel comprising the steps of
(1) feeding municipal waste material into a pressure vessel
(2) agitating the content of the vessel while having steam pressure in the vessel by direct steam injection and by indirect heating
(3) depressurizing the vessel, and applying vacuum to the vessel in order to dry the fibrous content of the vessel to about 40-60 wt% of water
(4) discharging the vessel
(5) classifying the treated waste through a screen to remove the <12 mm fraction comprising less than 2% by weight of plastic (calculated on 60 wt% moisture in the fibers)
(6) treating the <12 mm fraction in an air classification device to yield a fibrous fraction comprising less than 2% by weight of inorganic particles (calculated on 60 wt% moisture in the fibers).

**30.** Process to treat waste comprising the steps of
(1) feeding waste material into a pressure vessel
(2) agitating the content of the vessel while having steam pressure in the vessel by direct steam injection and by indirect heating
(3) depressurizing the vessel,
(4) discharging the vessel
(5) classifying the so treated waste through a screen to remove the <15 mm or smaller fraction wherein said fraction comprises less than 5 % by weight of plastic (calculated on 60 wt% moisture in the fibers)
wherein the indirect heating is caused in the vessel which is heated in step (2) both by heating through a jacket and through conduits inside the vessel.

**31.** Process according to claim 30, wherein steam used for the direct steam injection is derived from another pressure vessel used to treat waste.

**32.** Process according to claim 31, wherein more than 90% of the steam used for the direct steam injection is derived from another pressure vessel used to treat waste.

**33.** Process according to any one of claims 30 - 32, wherein the average energy input is about 125 kWh per tonne of waste or less.

**34.** Process according to any one of claims 30-33, wherein the amount of energy supplied during normal operation through (fresh) boiler steam is 25% or less.

**35.** Process according to claim 34, wherein the amount of energy supplied through boiler steam is 10% or less.

**36.** Process according to any one of claims 30 - 35, wherein the vessel is designed such that with respect to the energy supplied through indirect heating, about 35 - 50 % of the energy can be transferred through the jacket, and about 50 - 65 % of the energy can be transferred through the internal conduits.

**37.** Process according to any one of claims 30 - 36, wherein no fresh steam is supplied to one or more vessels during normal operation.

**38.** Process according to any one of claims 30 - 37, wherein the conduits are assembled in such a way as to being able to act as baffles to stir the content of the vessel.

**39.** Process according to any one of claims 30 - 38, wherein the vessel is insulated on the outside of the vessel.

**40.** Plant suitable to perform a process according to any one of claims 29 -39
